(19) Europäisches Patentamt

European Patent Office

Office européen des brevets

(11) **EP 0 919 802 B1**

(12) **EUROPÄISCHE PATENTSCHRIFT**

(45) Veröffentlichungstag und Bekanntmachung des Hinweises auf die Patenterteilung:
**26.01.2005 Patentblatt 2005/04**

(51) Int Cl.⁷: **G01N 21/78**, G01N 21/88, G01B 11/06, G01N 19/04, G01N 25/72

(21) Anmeldenummer: **98122096.5**

(22) Anmeldetag: **21.11.1998**

(54) **Verfahren zum Prüfen der Eigenschaft einer Beschichtung**

Process for testing the property of a coating

Procédé pour tester la propriété d'un revêtement

(84) Benannte Vertragsstaaten:
**AT BE CH DE FI FR GB IT LI NL SE**

(30) Priorität: **27.11.1997 DE 19752573**
**27.11.1997 DE 19752574**
**27.11.1997 DE 19752576**

(43) Veröffentlichungstag der Anmeldung:
**02.06.1999 Patentblatt 1999/22**

(73) Patentinhaber: **Florin, Christian**
**6373 Ennetbürgen (CH)**

(72) Erfinder: **Florin, Christian**
**6373 Ennetbürgen (CH)**

(74) Vertreter: **Hiebsch, Gerhard F., Dipl.-Ing. et al**
**Patentanwälte,**
**Dipl.-Ing. G.F. Hiebsch,**
**Dipl.-Ing. N. Behrmann M.B.A. (NY),**
**Heinrich-Weber-Platz 1**
**78224 Singen (DE)**

(56) Entgegenhaltungen:
**FR-A- 2 681 427        GB-A- 2 220 065**
**US-A- 3 504 524        US-A- 4 634 291**
**US-A- 4 647 220**

## Beschreibung

Die Erfindung betrifft ein Verfahren zum Prüfen der Eigenschaften -- wie Schichtdicke, Porosität und Haftungsfähigkeit -- einer auf ein Werkstück oder ein Substrat aufgebrachten Beschichtung, insbesondere einer Schutzschicht.

Das Prüfen von durch thermisches Spritzen oder durch andere Verfahren insbesondere auf metallische Flächen aufgebrachten Beschichtungen ist bis zum heutigen Tag mit Problemen behaftet, vor allem eine zerstörungsfreie Kontrolle der Schichtdicke, Porosität und von Haftungsfähigkeit; mit allen derzeit verwendeten Prüfverfahren kann nur die Schichtdicke oder die Porosität in bestimmten Bereichen gemessen werden; letztere ist in den meisten Fällen auf den Werkstoff der Schicht oder den des Grundwerkstoffes zurückzuführen. Ebenfalls ist für die Überprüfung von Fehlern der Schichthaftung in situ oder im Laboratorium kein besonderes Verfahren bekannt. Dieser Mangel ergibt sich in der Hauptsache dadurch, dass die meisten Messgeräte für die Bestimmung der Schichtdicke nach dem magnetischen Prinzip oder mit Wirbelstrom arbeiten, wodurch in Abhängigkeit vom Werkstoff eine Begrenzung der Anwendung gegeben ist.

Die bekannten zerstörungsfreien Verfahren wie Ultraschall zur Messung von Porosität oder Haftung sind wegen der Auflösbarkeit der Fehler nur in sehr seltenen Fällen einzusetzen, weshalb in den meisten Fällen diese beiden Eigenschaften durch zerstörende Verfahren wie Schliffprobe für die Porosität und Zugversuche für die Haftung an mitgespritzten Vergleichsproben gemessen werden.

Bekannte Verfahren zum zerstörungsfreien Prüfen von Beschichtungen werden in der Produktion nur bedingt eingesetzt, da die Auswertung relativ kompliziert ist und an das prüfende Personal erhöhte Anforderungen zu stellen sind. Gleiches gilt für auf dem Markt befindliche Prüfeinrichtungen, wie sie beispielhaft durch US-A-4 647 220 mit Infrarotstrahlen nutzende Vorrichtungen vorgeschlagen werden.

Bei einem Verfahren zur Schweißgüteprüfung unter Erfassung der von dem Werkstück infolge seiner Erwärmung abgegebenen Infrarotstrahlung und Erzeugung eines zur Intensität der Strahlung proportionalen Messsignals nach DE 24 45 132 A1 wird letzteres mit einem Bezugssignal und Erzeugung eines Impulses verglichen, dessen Dauer ein Maß für die zugeführte Wärmeenergie darstellt, wobei mindestens eine Impulsflanke erzeugt wird, wenn Messsignal und Bezugssignal gleich sind. Zudem soll hier ein Befehlsimpuls erzeugt werden, dessen Beginn im Erwärmungszyklus zeitlich vom Beginn der Zufuhr von Wärmeenergie an das Werkstück abhängig ist; die andere Flanke des Messimpulses lässt man mit dem Beginn des Befehlsimpulses zusammenfallen.

Schließlich erörtert die DE 40 36 857 A1 ein Verfahren und eine Vorrichtung zur berührungslosen Erfassung von Schichtparametern, insbesondere zur kontinuierlichen Überwachung eines Schichtdickenaufbaus oder -abbaus. Zu diesem Zweck wird ein Laserstrahl auf der Oberfläche fokussiert und während der Schichtdickenänderung auf der Oberfläche fokussiert gehalten. Zur Auswertung wird die Bewegung des Fokussierungspunktes herangezogen. Eine genaue Auswertung soll sich unter Anwendung des Speckle-Interferometrieeffektes ergeben können, wobei der von der Oberfläche reflektierte Laserstrahl auf einem Schirm ein Muster erzeugt, dessen Bewegung ein eindeutiges Indiz für die Lage des Brennpunktes liefert. Zudem soll zur Analyse der Schichtstruktur ein zweidimensionales CCD-Array -- gegebenenfalls verstärkt durch eine vorgeschaltete Mikrokanalplatte (MCP) -- eingesetzt werden. Die zur Schichtstrukturanalyse notwendige Bildauswertung erfolgt mittels eines Computerprogramms.

Ein weiterer Mangel solcher Verfahren ist es, dass nur die Wärmeverteilung im Teil bzw. der Wärmefluss gemessen wird. Da alle diese Geräte zur Auswertung einen großen Geräteaufwand bedingen und sehr kostspielig sind, können sie für Anwendungen "vor Ort" -- beispielsweise in einer Großfeuerungsanlage -- zur Schichtdickenmessung oder zum Feststellen der Haftung der Schicht auf dem Grundwerkstoff nicht eingesetzt werden.

Verfahren, die mit Infrarotstrahlen arbeiten, können üblicherweise nur zum Messen der Wärmeverteilung im Teil bzw. des Wärmeflusses herangezogen werden.

So ist eine Aussage über die Güte einer Beschichtung auf einer Fläche beim Stande der Technik sehr begrenzt.

Nach dem allgemeinen Grundwissen des Ingenieurs können Stoffe in drei physikalischen Zuständen vorliegen, nämlich als feste, flüssige oder gasförmige Stoffe. Bei festen Stoffen besteht eine Zuordnung der Moleküle. Durch Packung von Molekülen im festen Zustand können zwei verschiedenartige physikalische Strukturen -- der nichtkristallin und kristallin feste Zustand -- entstehen. Der im kristallinen Zustand bestehende hohe Orientierungsgrad erzeugt aufgrund von Orientierungseinschränkungen von Atomen oder Molekülen im Gitternetzwerk einzigartige optische Eigenschaften.

Der flüssige Zustand liegt zwischen dem festen und dem gasförmigen Zustand, und bei einem Gas ist der Orientierungsgrad zwischen den Molekülen vollkommen zufällig.

Ausgewählte organische Verbindungen durchlaufen während der thermischen Umwandlung vom festen in den flüssigen Zustand eine Zwischenphase, welche die anisotropen -- eine optische Richtung aufweisenden -- Eigenschaften kristalliner Feststoffe zeigt. Zur Beschreibung dieses Phänomens wurde der Begriff "flüssig-kristalliner Zustand" geprägt. Der flüs flüssigkristalline Zustand bzw. die Mesophase wurde wissenschaftlich in bestimmte Kategorien eingestuft, die auf der Art des Eindringens in den flüssig-kristallinen Bereich sowie auf der Orientierung und dem Grad der räumlichen Anordnung der Moleküle in der Stoffmasse basieren:

(a) Thermotrope Flüssigkristalle

- nematischer Flüssigkristall (marmorierte, Schlieren- und pseudoisotropfe Texturen);

    verdrillt nematischer oder cholesterischer Flüssigkristall;
    klassischer nematischer Flüssigkristall;
    zybotaktisch nematischer Flüssigkristall;
    schiefwinkelig-zybotaktisch nematischer Flüssigkristall.

- Smektischer Flüssigkristall (übliche Texturen: Brennpunktskegelschnitt, Schlieren, polygonal und acht polymorphe Formen, genannt Smektisch A,B,C, D,E,F,G und H; Mosaik); die D-Form erscheint isotrop.

(b) Lyotrope Flüssigkristalle

    Schichtförmige Packung (reine Texturen);

    Braggsches Abstandsverhältnis 1:1/2:1/3 darstellende Strukturanordnung mit eindimensionaler Symmetrie (eindimensionale Periodizität);

    tetragonale Packung

    Braggsches Abstandsverhältnis 1:1/2:1/3:1/4 darstellende Strukturanordnung.

(c) Hexagonale und komplex hexagonale Packung

    Braggsches Abstandsverhältnis 1:1/ V3:1/ V4:1/ V7 darstellende Strukturanordnung.

(d) Kubische Packung (isotrop)

    kubische Symmetrie darstellende isotrop lyotrope Flüssigkristalle.

Die bei diesen Stoffen erfolgende normale Phasenumwandlung ist:

Kristalliner -- → flüssig-kristalliner -- → Isotrope Flüssigkeit

Feststoff          Zustand (anisotrope

                   Flüssigkeit)              (ohne optische Richtung)

Bei Flüssigkristallen der thermotropen Art wird Phasenumwandlung durch eine Temperaturänderung angeregt.

Cholesterol-Ester -- welche den cholesterischen Zustand durchlaufen -- weisen anisotrope optische Eigenschaften kristalliner Feststoffe auf. Infolge der einzigartigen Struktur der Phase werden in dem Stoff irisierende Farben beobachtet, wenn sie bei einer vorgegebenen Temperatur mit weißem Licht angestrahlt werden.

Ein cholesterisch flüssig-kristallines System -- sofern dieses sachgemäß formuliert wurde -- reagiert auf Temperaturänderungen, indem es sequentiell das komplette visuelle Spektrum -- von rot bis violett -- in Bruchteilen von Graden bzw. mehreren Graden durchläuft, und zwar in Abhängigkeit der Cholesterol-Ester, die diese Formulierung enthalten. Dieses Farbphänomen ist reversibel und soll in einem Temperaturbereich von -20° C bis 250°C funktionieren.

Durch Flüssigkristalle gestreute Farben stellen nur einen Bruchteil des einfallenden Lichtes dar. Der übrige Teil des Primärlichtes wird durch die Flüssigkristalle übertragen.

Es wird daher ein absorbierender, schwarzer Hintergrund benötigt, um eine Reflextion des übertragenden Lichtes zu vermeiden und dabei die Reinheit bzw. das Auflösungsvermögen der durch das flüssig-kristalline System gestreuten Farben oder Wellenlängen zu verstärken.

In Kenntnis dieses Standes der Technik hat sich der Erfinder das Ziel gesetzt, ein solches Verfahren zum zerstörungsfreien Prüfen zu vereinfachen sowie zu ermöglichen, die wesentlichen Fehler relativ leicht und einfach zu prüfen. Zudem soll zu seiner Durchführung ein kleines und leicht transportierbares sowie in situ auch durch einen Laien handhabbares Prüfgerät angeboten werden können.

Zur Lösung dieser Aufgabe führen die Lehren der unabhängigen Patentansprüche; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß wird auf die Oberfläche der zu prüfenden Schicht eine -- flüssige oder pastenförmige Masse als --Beschichtung aufgetragen und diese mit zumindest einem Energie- oder Wärmestrahlungsimpuls beaufschlagt, wobei die fehlerhaften Stellen der zu prüfenden Schicht durch Farbänderung angezeigt werden, oder die Schichteigenschaften werden durch reflektierende Strahlung an der Schichtoberfläche bestimmt; der Erfinder hat erkannt, dass es mit einem gepulsten Energiestrahl möglich wird, die erörterten Prüfungen gleichermaßen vor Ort und im Laboratorium durchzuführen.

Es wird ein Energieimpuls mittels Strahlen -- etwa durch einen Lichtblitz oder einen Laserstrahlimpuls -- auf die Oberfläche der zu prüfenden Beschichtung abgegeben, die Reflexion desselben in Abhängigkeit von der Zeit gemessen sowie zur Bestimmung der Schichtdicke, der Bindung der benachbarten Schichtflächen oder der Porosität der Beschichtung herangezogen. Der besondere Vorteil dieses Verfahrens liegt darin, dass es nicht -- wie die bislang bekannten Verfahren -- durch die Beschaffenheit des Schicht- oder des Grundwerkstoffes begrenzt ist.

Bei dem beschriebenen Verfahren handelt es sich um zwei unterschiedliche Möglichkeiten, die beide mit gepulstem Energiestrahl arbeiten, da nur diese Maßnahme eine ausreichende Kontrolle unabhängig vom Schicht- oder Grundwerkstoff erlaubt. Bei dem ersten dieser Schritte erfolgt die Prüfung durch den gepulsten Energiestrahl über einen von den Fehlern beeinflussten irreversiblen oder reversiblen Farbumschlag einer auf die zu prüfende Schichtoberfläche aufgestrichenen Masse, im anderen Falle über die Reflexion des Energiestrahls in bestimmten Wellenlängenbereichen an der Schichtoberfläche.

Als günstig hat es sich erwiesen, den Energieimpuls auf die Oberfläche der zu prüfenden Schicht durch eine Lichtquelle aufzubringen, bevorzugt durch ein Blitzlicht, einen Laser oder eine Infrarotstrahlungsquelle.

Nach einem weiteren Merkmal der Erfindung werden die reflektierenden Strahlen, bevorzugt die Infrarotstrahlen, über eine mit einem Sensor für die Strahlung -- insbesondere für Infrarotstrahlung -- versehene Kamera aufgenommen. Als günstig haben sich Sensoren mit einem Sensibilitätsbereich von 2000 bis 14000 Nanometer erwiesen, vor allem InSb-Sensoren mit einem Sensibilitätsbereich von 2000 bis 5600 nm oder Hg-Cd-Te-Sensoren mit einem Sensibilitätsbereich von 8000 bis 14000 nm. Zudem sollen jene Signale des reflektierenden Impulses in 3 bis 20 μsec, vorzugsweise 5 bis 10 μsec, abgefragt werden.

Vorteilhafterweise wird die Oberfläche von der Kamera mit einer Geschwindigkeit für die Strahlen- bzw. Infrarotaufnahmen von 25 bis 700 Hz -- vorzugsweise 50 bis 400 Hz -- abgetastet. Die von der Kamera aufgenommenen Infrarotbilder der reflektierenden Strahlung sollen mit einem an die Kamera angeschlossenen Rechner für mindestens zwei bis zehn Bilder -- vorzugsweise vier bis sieben Bilder -- ausgewertet werden.

Nach einer anderen Maßgabe sollen die Schichteigenschaften punktförmig gemessen bzw. diese Schichteigenschaften oder deren Unterschiede über größere Flächen durch ein Aufnahmefeld festgestellt zu werden vermögen.

Der Einsatz des oben beschriebenen Verfahrens -- das bevorzugt mit einer tragbaren und vor Ort einsetzbaren Infrarottestvorrichtung durchgeführt wird -- hat sich als günstig erwiesen für das Prüfen einer Beschichtung, die durch thermisches Spritzen, insbesondere durch thermisches Spritzen mit pulverförmigen Werkstoffen, hergestellt worden ist, wobei vor allem pulverförmige metallische, pulverförmige keramische Werkstoffe oder aber Kunststoffpulver zum Einsatz gelangen. Zur Erzeugung der Beschichtung können bei der erfindungsgemäßen Verwendung drahtförmige Werkstoffe, insbesondere Massivdrähte oder Fülldrähte, eingesetzt worden sein.

Auch ist die Verwendung des erfindungsgemäßen Verfahrens bei Beschichtungen denkbar, die durch autogenes Flammspritzen, insbesondere durch Hochgeschwindigkeitsflammspritzen, oder durch Plasmaspritzen, durch Drahtflammspritzen oder Lichtbogendrahtspritzen hergestellt worden ist. Zudem ist dieses Verfahren auch geeignet zum Prüfen einer durch Plasmapulverauftragsschweißen -- insbesondere durch Plasmapulverauftragsschweißen mit einem pulverförmigen Werkstoff -- hergestellte Beschichtung.

Bevorzugte Einsatzbereiche für das Infrarottesten von Beschichtungen sind Großfeuerungsanlagen, Gasturbinen oder Wasserkraftturbinen. Mit der irreversiblen bzw. der reversiblen Masse wird erfindungsgemäß eine metallische Beschichtung oder eine keramische Beschichtung kontrolliert, gegebenenfalls auch eine Kunststoffbeschichtung.

Der Unterschied der Erfindung zu bekannten Verfahren besteht darin, dass alle Verfahren den zu prüfenden Teil erwärmen und das Bild durch die Wärmeverteilung erzeugen, nicht aber mit Energieimpulsen gearbeitet wird. Daher ist es mit diesen Verfahren nicht möglich, dass eine Schichtdicke oder eine Schicht z. B. auf Poren oder Risse geprüft werden kann. Ferner verwenden alle diese Verfahren sehr langwellige Infrarotstrahlen.

Bei Messungen nach dem bekannten Verfahren handelt es sich um Messungen mit einer Wartezeit zum Temperaturausgleich und bei den beanspruchten Verfahren erfolgt die Messung direkt über den reflektierten Impuls beim Auftreffen.

Auch liegt es im Rahmen der Erfindung, auf die zu prüfende Schicht eine irreversible Masse aus einem Farbkern und einer -- sich beim Erreichen einer bestimmten Temperatur zerstörenden -- Außenhaut zur Freigabe des Farbkerns, also mit irreversiblem Farbumschlag, aufzutragen.

Bei einer anderen Ausgestaltung wird auf die zu prüfende Schicht eine Masse aus einem Flüssigkristall mit reversiblem Farbumschlag aufgebracht, die mit einer beim Erreichen einer bestimmten Temperatur durchlässig werdenden Außenhaut zur Freigabe jenes Flüssigkristalls versehen ist. Vorteilhafterweise kann auch auf die zu prüfende Schicht eine solche reversible Masse aus Salzen oder Estern der Ölsäure aufgetragen werden, die mit einer beim Erreichen einer bestimmten Temperatur durchlässig werdenden Außenhaut -- zur Freigabe der Oleate -- versehen ist. Dabei soll für eine Umschlagreaktion im Temperaturbereich von 10°C bis 50°C die Zusammensetzung der Masse -- in Gew.-%, bezogen auf die Gesamtmasse -- folgendermaßen sein

- für den Kern: Oleate 10 bis 90, Nanomate Rest,
- für den Mantel: Gelatine 5 bis 50.

Die von der Umhüllungsschicht, der Größe des Oleats oder des Farbtröpfchens und der Zusammensetzung abhängige Fehlererkennbarkeit liegt für Schichtdickemessungen erfindungsgemäß bei 5 bis 1000 µm -- insbesondere 10 bis 700 µm bzw. 20 bis 500 µm --, für die Feststellbarkeit des Porendurchmessers bei > 5 µm -- vorzugsweise > 10 µm bzw. 20 µm -- und für das Verdeutlichen eines Haftungsfehlers bei > 1 x der Schichtdicke.

Die irreversible bzw. die reversible Masse wird bei der Erfindung zum einen auf die gewünschte Anzeigegenauigkeit über die Zusammensetzung des Gemisches bzw. die Dicke der Ummantelung des Oleats oder des Farbkerns eingestellt, zum anderen auf das vorgegebene Anzeigefenster für die Temperatur über die Dicke der Ummantelung des Oleats oder des Farbkerns.

Die Verwendung des oben beschriebenen Verfahrens -- das bevorzugt mit einer tragbaren und vor Ort einsetzbaren Infrarottestvorrichtung durchgeführt wird -- hat sich als günstig erwiesen für das Prüfen einer Beschichtung, die durch thermisches Spritzen, insbesondere durch thermisches Spritzen mit pulverförmigen Werkstoffen, hergestellt worden ist, wobei vor allem pulverförmige metallische, pulverförmige keramische Werkstoffe oder aber Kunststoffpulver zum Einsatz gelangen. Zur Erzeugung der Beschichtung können bei der erfindungsgemäßen Verwendung drahtförmige Werkstoffe, insbesondere Massivdrähte oder Fülldrähte, eingesetzt worden sein.

Auch kann mit der irreversiblen bzw. der reversiblen Masse eine durch autogenes Flammspritzen, insbesondere durch Hochgeschwindigkeitsflammspritzen, oder durch Plasmaspritzen, durch Drahtflammspritzen oder Lichtbogendrahtspritzen hergestellte Beschichtung kontrolliert werden.

Bevorzugte Einsatzbereiche für das Infrarottesten von Beschichtungen sind Großfeuerungsanlagen, Gasturbinen oder Wasserkraftturbinen.

Von besonderem Vorteil ist die Verwendung der irreversiblen bzw. der reversiblen Masse darüber hinaus zur Kontrolle von großflächigen Beschichtungen.

Beim Testen von Folien, die mit einem reversiblen oder irreversiblen Farbumschlag behaftet und die bekannt für die schnelle Messung von Oberflächentemperaturen oder zum Anzeigen von Temperaturunterschieden auf Flächen sind -- beispielsweise zum Auffinden von Rohren von Fußboden-Heizungen oder Warmwasserleitungen in Mauern --, konnte festgestellt werden, daß es überraschenderweise möglich ist, diese Folie bzw. eine auf die Folie aufgebrachte Schicht auch zur zerstörungsfreien Kontrolle von Schichten bis zu einer Schichtdicke von etwa 2 mm zu verwenden.

Es wurden streichbare Massen gefunden, die beim Erreichen einer bestimmten Temperatur bzw. bei einer über die Zusammensetzung oder den Aufbau der Partikel in der streichbaren Masse einstellbaren Temperatur einen irreversiblen oder reversiblen Farbumschlag oder eine Verfärbung ergeben, der/die anschließend zur Aussage über die Güte bzw. Qualität der Beschichtung herangezogen zu werden vermögen. Diese Auswertung kann je nach der gewünschten Genauigkeit über einen direkten optischen Vergleich mit einer Standardabbildung oder über eine Videokamera mit einer anschließenden Computer-Bildanalyse bei reversiblen Aufstreich-Masse erfolgen.

Von Bedeutung ist zudem die Definition der Schichtdicke:

$$\text{Schichtdicke} = \frac{\text{Wellenlänge}}{\text{Wärmekapazität x Dichte,}}$$

worin die

Wellenlänge der Frequenz des Lichtimpulses bzw. der Zeit entspricht.

Der Unterschied der Erfindung zu bekannten Verfahren besteht darin, dass alle Verfahren den zu prüfenden Teil erwärmen und das Bild durch die Wärmeverteilung erzeugen, nicht aber mit Energieimpulsen gearbeitet wird. Daher ist es mit jenen Verfahren nicht möglich, dass eine Schichtdicke oder eine Schicht z. B. auf Poren oder Risse geprüft werden kann. Ferner verwenden alle diese Verfahren sehr langwellige Infrarotstrahlen.

Bei Messungen nach dem bekannten Verfahren handelt es sich um Messungen mit einer Wartezeit zum Temperaturausgleich und bei den beanspruchten Verfahren erfolgt die Messung direkt über den reflektierten Impuls beim Auftreffen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1: eine schematische Skizze zur störungsfreien Kontrolle der Haftung zwischen zwei Schichten;

Fig. 2: einen Längsschnitt durch den zweischichtigen Prüfling mit während der Kontrolle vorhandenen thermischen Wellen;

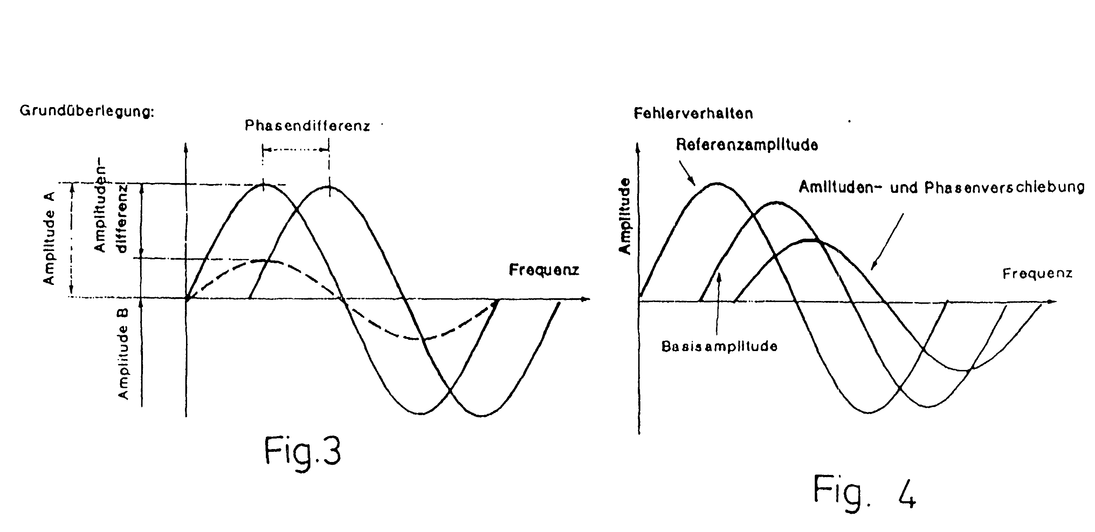

Fig. 3,4: zwei Grafiken zur Beeinflussung von Phasendifferenzen durch Fehler, nämlich gemäß Fig. 3 zum Verlauf der thermischen Wellen als Grundüberlegung und in Fig. 4 bei Fehlverhalten der Wellen;

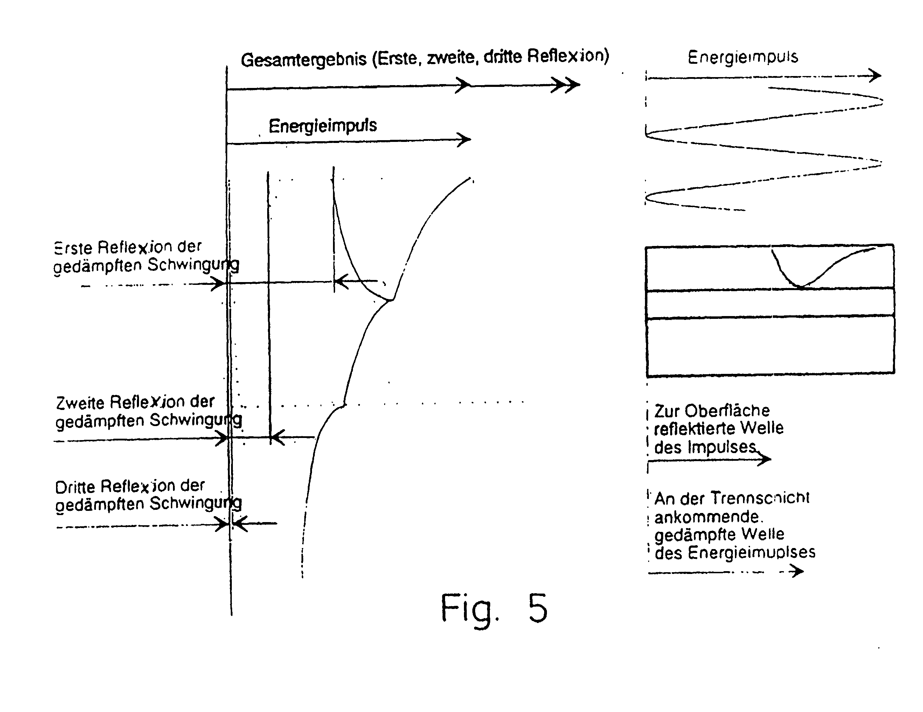

Fig. 5: eine Skizze zu einem Energieimpulsverfahren mit einzelnen Stufen der Reflektionen mit Dämpfung der Schwingungen.

Für das Messen einer von der Oberfläche 10 der Beschichtung 12 eines Substrates oder Werkstückes 14 reflektierenden -- von einem Impulsgeber 16 ausgehenden -- Infrarotstrahlung wird eine Kamera 18 eingesetzt, die mit einem Sensor im Sensibilitätsbereich von 2000 bis 14000 Nanometer arbeitet; in bestimmten Fällen empfiehlt es sich, einen In-Sb-Sensor im Sensibilitätsbereich von 2000 bis 5600 nm oder einen Hg-Cd-Te-Sensor mit 8000 bis 14000 nm zu verwenden. Die Abtastgeschwindigkeit für die Infrarotaufnahme liegt zwischen 25 und 700 Hz.

Die Auswertung der Messdaten erfolgt über einen stationären oder tragbaren Rechner 20, und es sollen nur einzelne Daten gemessen werden, etwa Schichtdicke a, Haftung oder Porosität. Kamera 18 und Rechner 20 bzw. ein dazu notwendiger Chip können in einem aus Gründen der Übersichtlichkeit nicht dargestellten Gehäuse angeordnet sein. In diesem Falle wird der gefundene Wert oder das Bild auf einer Liquidkristallanzeige als Bild oder als Zahl angezeigt.

Das nachfolgend beschriebene Messverfahren bietet besonders gute Resultate bei der Kontrolle von Schichten 12, die durch thermische Spritzverfahren oder durch ein Pulverauftragsschweißverfahren aufgebracht worden sind.

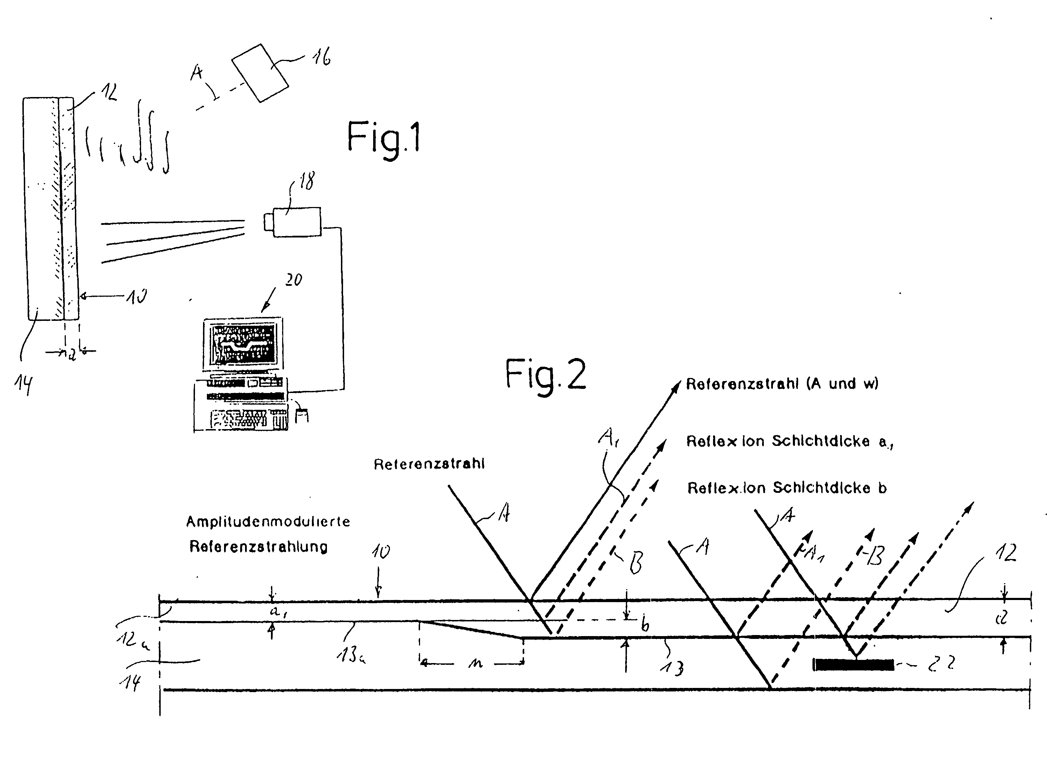

Gemäß Fig. 2 setzt sich die Beschichtung 12 jener Schichtdicke a in der linken Figurenhälfte nach einem Reduzierungsbereich der Länge n als Beschichtung $12_a$ mit verminderter Schichtdicke b fort; die Differenzdicke ist mit b bezeichnet. Auf die Beschichtung 12 treffende Referenzstrahlen A werden in jenem Reduzierbereich n reflektiert; die von den Schichtgrenzen 13, $13_a$ reflektierten Anteile sind mit $A_1$ und B bezeichnet.

Außerdem ist in Fig. 2 bei 22 ein Fehlerbereich zu erkennen, von dem ebenfalls reflektierte Anteile $A_1$, B ausgehen.

Beim Aufbringen eines Lichtimpulses wird derselbe teilweise an der Oberfläche reflektiert. Der andere Energieanteil dringt abhängig von der Impulszeit und der Phaseverschiebung in die Oberfläche ein und erzeugt eine weitere Reflektion, da dieser Vorgang abhängig ist von der Phasenverschiebung (Fig. 2). Durch diesen Vorgang besteht die Möglichkeit, die Bilder schichtweise auszuwerten und die Fehler in den verschiedenen Tiefen zu definieren.

Bei der Methode zum Bestimmen der Fehler wird eine streichbare Masse, die beim Erreichen einer bestimmten Temperatur -- bzw. bei einer über die Zusammensetzung oder den Aufbau der Partikel in der streichbaren Masse einstellbaren Temperatur -- einen irreversiblen oder reversiblen Farbumschlag oder eine Verfärbung aufweist; diese kann anschließend für Aussagen zur Güte bzw. Qualität der Beschichtung herangezogen werden. Die Auswertung kann je nach der gewünschten Genauigkeit über einen direkten optischen Vergleich mit einer Standardabbildung bei irreversiblen oder über eine Videokamera mit anschließender Computer-Bildanalyse bei reversiblen Aufstreich-Massen erfolgen.

Die von der äußeren Umhüllungsschicht, der Größe des Oleats- oder des Farbetröpfchens und der Zusammensetzung abhängige Fehlererkennbarkeit liegt für Schichtdickenmessungen bei 5 bis 1000 µm -- vorzugsweise 20 bis 500 µm --, für die Feststellbarkeit des Porendurchmessers bei > 5 µm, insbesondere über 20 µm und für das Feststellen eines Haftungsfehlers bei einem Maß über Schichtdicke.

Beispiel 1

Zur Verbesserung der Lebensdauer der Schaufeln einer Francisturbine wurde gegen den Verschleiß durch Kavitation und Erosion mittels thermischen Spritzens mit einer Hochgeschwindigkeits-Flammspritzanlage (HVOF) eine Schutzschicht einer Dicke von etwa 0,5 mm aufgebracht; als Werkstoff für die Beschichtung wurde ein WC/Co Pulver ausgewählt.

Die Schutzschicht sollte nach dem Beschichten -- und anschließend in jährlichen Abständen -- gemessen und der Verschleiß festgestellt werden, um den Zeitpunkt für das Aufbringen einer neuen Verschleiß-Schutzschicht zu erkennen.

Da die Beschichtungen der Francisturbine im eingebauten Zustand -- also vor Ort -- vorgenommen wird, muss auch das Messverfahren sehr einfach und ohne großen Geräteaufwand zu verwenden sein.

Für die Testmessungen wurde eine irreversible Farbumschlagsbeschichtung ausgewählt; die Farbumschlagpaste wurde mit einem Pinsel auf die Schutzschicht aufgestrichen und dann zur Prüfung eingesetzt; auf die Pastenschicht wurde mit einer Halogenlampe ein Energieflash aufgebracht und die aufgestrichene Pastenschicht nach einer Reaktionszeit für den Farbumschlag von wenigen Minuten wieder abgezogen, dann wurde ihre Farbe mit der Standardfarbe an einer Platten definierter Schichtdicke verglichen.

Der abgezogene Film wurde bei den Unterlagen für die Turbine aufbewahrt, so dass er als Vergleich für die nächste Kontrollmessung verwendet werden kann. Wie die Praxis gezeigt hat, können auch sehr kleine Änderungen bei der Schichtdicke festgestellt werden.

Beispiel 2

An einem metallischen Verschleißteil sollte der Verlauf des Verschleißes einer mit einem Plasmaspritzverfahren aufgebrachten Beschichtung verfolgt werden. Dazu wurde nach dem Beschichten auf die Fläche eine reversible Farbumschlagschicht (Liquid Crystal) in Pastenform aufgestrichen und anschließend mit einer Blitzlampe ein Energieflash aufgebracht.

Die nach einer kurzen Reaktionszeit auftretenden Farbreaktionen wurden mit einer Videokamera mit hoher Farbauflösung aufgenommen, das Bild wurde zur Bildanalyse in einen Computer eingelesen. Die Ergebnisse zeigten eine gute Schicht gleichmäßiger Schichtstärke. Bei der Kontrolle der Beschichtung mit dem gleichen Verfahren konnte eine Abnahme durch Verschleiß an den Kanten festgestellt werden.

Beispiel 3

Eine auf einer Turbinenschaufel einer Francisturbine aufgebrachte Schicht muß in regelmäßigen Abständen auf Verschleiß der Schicht überprüft werden. Hierzu wurde eine reversible Farbumschlagsschicht eingesetzt mit einer Zusammensetzung

- für den Kern ein Gemisch aus      Oleaten 31,5 Gew.-%;
                                         Nanomaten 68,5 Gew.-%;
- für den Überzug aus      Gelatine 30 Gew.-%,

jeweils bezogen auf die Gesamtmasse zur Einstellung der Umschlagsreaktion auf 30°C.

Nach dem Aufstreichen und dem nachträglichen Aufbringen der Lichtimpulse konnte der Farbumschlag an den fehlerhaften Stellen der Beschichtung deutlich festgestellt werden.

**Patentansprüche**

1. Verfahren zum Prüfen der Eigenschaften wie Schichtdicke, Porosität und Haftungsfähigkeit einer auf ein Werkstück oder ein Substrat aufgebrachten Beschichtung, insbesondere einer Schutzschicht, bei dem auf die Oberfläche der zu prüfenden Schicht eine Masse als Beschichtung aufgetragen und diese mit zumindest einem Energie- oder Wärmestrahlungsimpuls beaufschlagt wird, wobei die Farbe der fehlerhaften Stellen der zu prüfenden Schicht verändert wird oder bei dem die Schichteigenschaften durch reflektierende Strahlung bestimmt werden, wobei die Reflexion des Energieimpulses in Abhängigkeit von der Zeit gemessen wird.

2. Verfahren nach Anspruch 1, **dadurch gekennzeichnet, dass** der Energieimpuls auf die Oberfläche der zu prüfenden Schicht durch eine Lichtquelle aufgebracht wird.

3. Verfahren nach Anspruch 1 oder 2, **dadurch gekennzeichnet, dass** der Energieimpuls auf die Oberfläche der zu prüfenden Schicht durch ein Blitzlicht aufgebracht wird.

4. Verfahren nach Anspruch 1 oder 2, **dadurch gekennzeichnet, dass** der Energieimpuls auf die Oberfläche der zu prüfenden Schicht durch einen Laser als Lichtquelle aufgebracht wird.

5. Verfahren nach Anspruch 1, **dadurch gekennzeichnet, dass** der Energieimpuls auf die Oberfläche der zu prüfenden Schicht durch eine Infrarotstrahlungsquelle aufgebracht wird.

6. Verfahren nach einem der Ansprüche 1 bis 5, **dadurch gekennzeichnet, daß** die reflektierenden Strahlen über eine mit einem Sensor für Strahlung, insbesondere für Infrarotstrahlung, versehene Kamera aufgenommen werden, wobei gegebenenfalls der Sensor einen Sensibilitätsbereich von 2000 bis 14000 nm aufweist.

7. Verfahren nach Anspruch 6, **gekennzeichnet durch** einen In-Sb-Sensor mit einem Sensibilitätsbereich von 2000 bis 5600 nm oder einen Hg-Cd-Te-Sensor mit einem Sensibilitätsbereich von 8000 bis 14000 nm.

8. Verfahren nach einem der Ansprüche 1 bis 7, **dadurch gekennzeichnet, dass** die Oberfläche von der Kamera mit einer Geschwindigkeit für die Strahlen bzw. die Infrarotaufnahmen von 25 bis 700 Hz, vorzugsweise 50 bis 400 Hz, abgetastet wird.

9. Verfahren nach einem der Ansprüche 1 bis 8, **dadurch gekennzeichnet, dass** die von der Kamera aufgenommenen Infrarotbilder der reflektierenden Strahlung mit einem an die Kamera angeschlossenen Rechner für mindestens zwei bis zehn Bilder, vorzugsweise vier bis sieben Bilder, ausgewertet werden.

10. Verfahren nach einem der Ansprüche 1 bis 9, **dadurch gekennzeichnet, dass** die Signale des reflektierenden Impulses in 3 bis 20 μsec, vorzugsweise 5 bis 10 μsec, abgefragt werden.

11. Verfahren nach einem der Ansprüche 1 bis 10, **dadurch gekennzeichnet, dass** die Schichteigenschaften punktförmig gemessen werden.

12. Verfahren nach einem der Ansprüche 1 bis 11, **dadurch gekennzeichnet, dass** die Schichteigenschaften oder deren Unterschiede über größere Flächen durch ein Aufnahmefeld gemessen werden.

13. Verfahren nach einem der Ansprüche 1 bis 12, **dadurch gekennzeichnet, dass** auf die zu prüfende Schicht eine Masse mit irreversiblem Farbumschlag aus einem Farbkern und einer sich beim Erreichen einer bestimmten Temperatur zerstörenden Außenhaut zur Freigabe des Farbkerns aufgetragen wird, oder dass auf die zu prüfende Schicht eine Masse mit reversiblem Farbumschlag aus einem Flüssigkristall aufgebracht wird, die mit einer beim Erreichen einer bestimmten Temperatur durchlässig werdenden Außenhaut zur Freigabe des Flüssigkristalls versehen ist.

14. Verfahren nach einem der Ansprüche 1 bis 12, **dadurch gekennzeichnet, dass** auf die zu prüfende Schicht eine Masse mit reversiblem Farbumschlag aus Salzen oder Estern der Ölsäure aufgebracht wird, die mit einer beim Erreichen einer bestimmten Temperatur durchlässig werdenden Außenhaut zur Freigabe der Oleate versehen ist, wobei gegebenenfalls die Zusammensetzung der Masse in Gew.-% der Anteile bezogen auf die Gesamtmasse einer Umschlagreaktion auf einen Temperaturbereich von etwa 10°C bis 50°C

- für den Kern       Oleate 10 bis 90 Gew.-%,
                          Nanomate 90 bis 10 Gew.-%,
- für den Mantel       Gelatine 5 bis 50 Gew.-%, ist, insbesondere auf einen Temperaturbereich von etwa 30°C
- für den Kern       Oleate etwa 31,5 Gew.-%,
                          Nanomate etwa 68,5 Gew.-%,
- für den Mantel       Gelatine etwa 30 Gew.-%.

15. Verfahren nach einem der Ansprüche 1 bis 14, **dadurch gekennzeichnet, dass** mit der irreversiblen bzw. der reversiblen Masse Schichtdicken von 5 bis 1000 μm gemessen werden, insbesondere Schichtdicken von 10 bis 700 μm, bevorzugt 20 bis 500 μm, oder dass mit der irreversiblen bzw. der reversiblen Masse Porenweiten von größer 5 μm gemessen werden, insbesondere Porenweite von > 10 μm, bevorzugt > 20 μm.

**16.** Verfahren nach einem der Ansprüche 1 bis 14, **dadurch gekennzeichnet, dass** mit der irreversiblen bzw. der reversiblen Masse die Haftung der Schicht auf dem Grundwerkstoff mit einer Fehlererkennbarkeit für die Haftung von mehr als Schichtdicke gemessen wird.

**17.** Verfahren nach einem der Ansprüche 1 bis 16, **dadurch gekennzeichnet, dass** die irreversible bzw. die reversible Masse auf die gewünschte Anzeigegenauigkeit über die Zusammensetzung des Gemisches bzw. die Dicke der Ummantelung des Oleats oder des Farbkerns eingestellt wird.

**18.** Verfahren nach wenigstens einem der Ansprüche 1 bis 17, **dadurch gekennzeichnet, dass** mit der irreversiblen bzw. der reversiblen Masse eine durch ein thermisches Spritzverfahren hergestellte Schicht kontrolliert wird.

**19.** Verfahren nach wenigstens einem der Ansprüche 1 bis 18 zum Prüfen einer durch thermisches Spritzen, mit pulverförmigen metallischen oder pulverförmigen keramischen Werkstoffen oder mit Kunststoffpulver/n hergestellten Beschichtung.

**20.** Verfahren nach wenigstens einem der Ansprüche 1 bis 19 zum Prüfen einer durch thermisches Spritzen mit drahtförmigen Werkstoffen, insbesondere mit Massivdrähten oder Fülldrähten, gegebenenfalls mit eine metallische Füllung aufweisenden Fülldrähten hergestellten Beschichtung, oder zum Prüfen einer durch thermisches Spritzen mit einem mit Kunststoff gebundenem oder in einen Kunststoffschlauch eingefülltem Pulver, insbesondere mit einem Füllstoff für die Kunststoffbindung oder den Kunststoffschlauch aus metallischem oder keramischem Pulver, hergestellten Beschichtung.


**Claims**

**1.** Method for testing properties such as film thickness, porosity and adhesiveness of a coating applied to a workpiece or a substrate, in particular a protective film, in which method a compound is applied as a coating to the surface of the film to be tested and this is acted upon by at least one energy or thermal radiation pulse, wherein the colour of the defective places in the film to be tested is changed, or in which method the properties of the coating are determined by reflected radiation, wherein the reflection of the energy pulse is measured as a function of time.

**2.** Method according to claim 1, **characterised in that** the energy pulse is applied to the surface of the film to be tested by a light source.

**3.** Method according to claim 1 or 2, **characterised in that** the energy pulse is applied to the surface of the film to be tested by a flashlight.

**4.** Method according to claim 1 or 2, **characterised in that** the energy pulse is applied to the surface of the film to be tested by a laser as light source.

**5.** Method according to claim 1, **characterised in that** the energy pulse is applied to the surface of the film to be tested by an infrared radiation source.

**6.** Method according to one of claims 1 to 5, **characterised in that** the reflected rays are recorded by a camera provided with a sensor for radiation, in particular for infrared radiation, wherein if need be the sensor has a sensitivity range of 2,000 to 14,000 nm.

**7.** Method according to claim 6, **characterised by** an In-Sb sensor having a sensitivity range of 2,000 to 5,600 nm or a Hg-Cd-Te sensor having a sensitivity range of 8,000 to 14,000 nm.

**8.** Method according to one of claims 1 to 7, **characterised in that** the surface is scanned by the camera at a rate for the rays or the infrared recordings of 25 to 700 Hz, preferably 50 to 400 Hz.

**9.** Method according to one of claims 1 to 8, **characterised in that** the infrared images of the reflected radiation recorded by the camera are evaluated by a computer connected to the camera for at least two to ten images, preferably four to seven images.

**10.** Method according to one of claims 1 to 9, **characterised in that** the signals of the reflected pulse are interrogated in 3 to 20 μsec, preferably 5 to 10 μsec.

11. Method according to one of claims 1 to 10, **characterised in that** the properties of the coating are measured in punctiform manner.

12. Method according to one of claims 1 to 11, **characterised in that** the properties of the coating or differences therein are measured over relatively large areas by means of a recording field.

13. Method according to one of claims 1 to 12, **characterised in that** a compound having an irreversible colour change composed of a coloured core and an outer skin which self-destructs on reaching a certain temperature to free the coloured core is applied to the film to be tested or that a compound having a reversible colour change composed of a liquid crystal is applied to the film to be tested which compound is provided with an outer skin which becomes transparent on reaching a certain temperature to free the liquid crystal.

14. Method according to one of claims 1 to 12, **characterised in that** a compound having a reversible colour change composed of salts or esters of oleic acid is applied to the film to be tested, which compound is provided with an outer skin which becomes transparent on reaching a certain temperature to free the oleates, wherein if need be the composition of the compound in % by weight of the constituents with reference to the total mass in a colour change reaction over a temperature range of approximately 10 °C to 50 °C is:

- for the core        10 to 90 % by wt oleates
                              90 to 10 % by wt nanomates
- for the mantle       5 to 50 % by weight gelatine,
  in particular over a temperature range of approximately 30 °C is:
- for the core        approx. 31.5 % by wt oleates approx. 68.5 % by wt nanomates
- for the mantle        approx. 30 % by wt gelatine.

15. Method according to one of claims 1 to 14, **characterised in that** by means of the irreversible or the reversible compound film thicknesses of 5 to 1,000 μm are measured, in particular film thicknesses of 10 to 700 μm, preferably 20 to 500 μm, or that by means of the irreversible or the reversible compound pore widths of greater than 5 μm are measured, in particular pore widths of > 10 μm, preferably > 20 μm.

16. Method according to one of claims 1 to 14, **characterised in that** by means of the irreversible or the reversible compound the adhesion of the film to the base material is measured with an error detectability for the adhesion of more than the film thickness.

17. Method according to one of claims 1 to 16, **characterised in that** the irreversible or the reversible compound is set to the desired display accuracy through the composition of the mixture or the thickness of the jacketing of the oleate or the colour core.

18. Method according to at least one of claims 1 to 17, **characterised in that** by means of the irreversible or the reversible compound a film produced by a thermal spraying method is inspected.

19. Method according to at least one of claims 1 to 18 for testing a coating produced by thermal spraying using powdered metallic or powdered ceramic materials or using plastic powder(s). ,

20. Method according to at least one of claims 1 to 19 for testing a coating produced by thermal spraying using wire-shaped materials, in particular using solid wires or filled wires, if need be using filled wires having a metallic filling, or for testing a coating produced by thermal spraying using a powder bound with plastic or charged into a flexible plastic tube, in particular with a filler for the plastic binding or the flexible plastic tube composed of metallic or ceramic powder.

**Revendications**

1. Procédé de vérification des propriétés telles que l'épaisseur d'une couche, la porosité et la capacité d'adhérence d'un revêtement appliqué sur une pièce ou un substrat, en particulier d'une couche de protection, procédé dans lequel une matière utilisée comme revêtement est déposée sur la surface de la couche à vérifier et est soumise à au moins une impulsion de rayonnement énergétique ou thermique, la couleur des emplacements défectueux de la couche à vérifier étant modifiée ou les propriétés de la couche étant déterminées par un rayonnement réfléchissant, la réflexion de l'impulsion énergétique étant mesurée en fonction du temps.

2. Procédé selon la revendication 1, **caractérisé en ce que** l'impulsion énergétique est dirigée sur la surface d'une couche à vérifier au moyen d'une source de lumière.

3. Procédé selon la revendication 1 ou 2, **caractérisé en ce que** l'impulsion énergétique est dirigée sur la surface de la couche à vérifier au moyen d'un flash.

4. Procédé selon la revendication 1 ou 2, **caractérisé en ce que** l'impulsion énergétique est dirigée sur la surface de la couche à vérifier au moyen d'un laser utilisé comme source de lumière.

5. Procédé selon la revendication 1, **caractérisé en ce que** l'impulsion lumineuse est dirigée sur la surface de la couche à vérifier au moyen d'une source de rayonnement infrarouge.

6. Procédé selon l'une des revendications 1 à 5, **caractérisé en ce que** les rayons réfléchis sont reçus par une caméra dotée d'un capteur de rayonnement, en particulier de rayonnement infrarouge, le capteur présentant le cas échéant une plage de sensibilité de 2000 à 14000 nm.

7. Procédé selon la revendication 6, **caractérisé par** un capteur In-Sb présentant une plage de sensibilité de 2000 à 5600 nm ou un capteur Hg-Cd-Te présentant une plage de sensibilité de 8000 à 14000 nm.

8. Procédé selon l'une des revendications 1 à 7, **caractérisé en ce que** la surface est explorée par la caméra à une vitesse adaptée à la réception de rayons respectivement de rayons infrarouges de 25 à 700 Hz, avantageusement de 50 à 400 Hz.

9. Procédé selon l'une des revendications 1 à 8, **caractérisé en ce que** les images infrarouges, reçues par la caméra, du rayonnement réfléchi sont exploitées par un calculateur raccordé à la caméra à raison d'au moins deux à dix images, avantageusement quatre à sept images.

10. Procédé selon l'une des revendications 1 à 9, **caractérisé en ce que** les signaux de l'impulsion réfléchie sont reçus pendant 3 à 20 $\mu$s, avantageusement 5 à 10 $\mu$s.

11. Procédé selon l'une des revendications 1 à 10, **caractérisé en ce que** les propriétés de la couche sont mesurées par points.

12. Procédé selon l'une des revendications 1 à 11, **caractérisé en ce que** les propriétés de la couche ou leurs différences sont mesurées sur une plus grande surface via une zone de réception.

13. Procédé selon l'une des revendications 1 à 12, **caractérisé en ce qu'**une matière à changement de couleur irréversible, qui est constituée d'un noyau coloré et d'une peau extérieure labile lorsqu'une température déterminée est atteinte afin de libérer le noyau coloré, est déposée sur la couche à vérifier et, **en ce qu'**une matière à changement de couleur réversible, qui est constituée d'un cristal liquide, est déposée sur la couche à vérifier, ladite matière étant dotée d'une peau extérieure devenant transparente lorsqu'une température déterminée est atteinte afin de libérer le cristal liquide.

14. Procédé selon l'une des revendications 1 à 12, **caractérisé en ce qu'**une matière à changement de couleur réversible, qui est constituée de sels ou d'esters de l'acide oléique est déposée sur la couche à vérifier, laquelle matière est dotée d'une peau extérieure devenant transparente lorsqu'une température déterminée est atteinte, la composition de la matière en pourcentage en poids de la masse totale d'une réaction de transformation dans une plage de température de 10°C à 50°C environ étant le cas échéant :

*   pour le noyau,     17 à 90% en poids d'oléate
                                     90 à 10% en poids de nanomate

*   pour l'enveloppe :     5 à 50% en poids de gélatine,
        en particulier dans une plage de température d'environ 30°C,

\*   pour le noyau,        environ 31,5% en poids d'oléate

environ 68,5% en poids de nanomate,

\*   pour l'enveloppe,        environ 30% en poids de gélatine.

**15.** Procédé selon l'une des revendications 1 à 14, **caractérisé en ce que** la matière irréversible respectivement réversible permet de mesurer des épaisseurs de couche de 5 à 1000 µm, en particulier des épaisseurs de couche de 10 à 700 µm, de préférence de 20 à 500 µm, ou **en ce que** la matière irréversible respectivement réversible permet de mesurer des tailles de pore de plus de 5 µm, en particulier des tailles de pore de plus de 10 µm, de préférence de plus de 20 µm.

**16.** Procédé selon l'une des revendications 1 à 14, **caractérisé en ce que** la matière irréversible respectivement réversible permet de mesurer l'adhérence de la couche sur la pièce de base avec une détection d'erreur pour l'adhérence supérieure à celle de l'épaisseur de la couche.

**17.** Procédé selon l'une des revendications 1 à 16, **caractérisé en ce que** la matière irréversible respectivement réversible est adaptée à la précision d'indication souhaitée de la composition du mélange respectivement de l'épaisseur de l'enrobage de l'oléate ou du noyau coloré.

**18.** Procédé selon au moins l'une des revendications 1 à 17, **caractérisé en ce que** la matière irréversible respectivement réversible permet de contrôler une couche fabriquée par un procédé de pulvérisation thermique.

**19.** Procédé selon au moins l'une des revendications 1 à 18 destiné à vérifier un revêtement réalisé par pulvérisation thermique de matières métalliques pulvérulentes ou céramiques pulvérulentes ou avec une poudre ou des poudres de matière plastique.

**20.** Procédé selon au moins l'une des revendications 1 à 19 destiné à vérifier un revêtement réalisé par pulvérisation thermique de matières filiformes, en particulier de fils pleins ou de fils de remplissage, le cas échéant de fils de remplissage comportant une charge métallique, ou pour vérifier un revêtement réalisé par pulvérisation thermique d'une poudre liée à une matière plastique ou remplissant un tuyau de matière plastique, en particulier d'une matière de charge constituée d'une poudre métallique ou de céramique et destinée à la liaison de matière plastique ou au tuyau de matière plastique.

EP 0 919 802 B1

# Fig.1

# Fig.2

Referenzstrahl (A und w)

Reflexion Schichtdicke $a_1$

Reflexion Schichtdicke b

Referenzstrahl

Amplitudenmodulierte Referenzstrahlung

EP 0 919 802 B1

Grundüberlegung:

Phasendifferenz

Amplitude A

Amplituden-differenz

Amplitude B

Frequenz

Fig.3

Fehlerverhalten

Referenzamplitude

Amlituden- und Phasenverschiebung

Amplitude

Basisamplitude

Frequenz

Fig. 4

Gesamtergebnis (Erste, zweite, dritte Reflexion)

Energieimpuls

Energieimpuls

Erste Reflexion der
gedämpften Schwingung

Zweite Reflexion der
gedämpften Schwingung

Dritte Reflexion der
gedämpften Schwingung

Zur Oberfläche
reflektierte Welle
des Impulses

An der Trennschicht
ankommende.
gedämpfte Welle
des Energieimuplses

Fig. 5

EP 0 919 802 B1